# EUROPÄISCHE PATENTANMELDUNG

(11) **EP 2 338 950 A2**
(43) Veröffentlichungstag der Anmeldung: **29.06.2011**
(21) Anmeldenummer: 09837237.8
(22) Anmeldetag: 10.08.2009
(51) Int. Cl.: C09K 19/12

(54) **KOLLOID-FLÜSSIGKRISTALLVERBUNDSTOFF FÜR ELEKTROOPTISCHE VORRICHTUNGEN**

(30) Priorität: 20.08.2008 AZ 8016608
(71) Anmelder: Bakinsky Gosudarstvenny Universitet, Baku 1148 (AZ)
(72) Erfinder: BAIRAMOV, Gazanfar Muzaffard ogli, Baku 1134 (AZ); IMAMALIEV, Abbas Ragim ogli, Baku 1012 (AZ); IBRAGIMOV, Takhir Dzhumshud ogli, Baku 1102 (AZ); MAGERRAMOV, Abel Mamedali ogli, Baku 1100 (AZ)
(74) Vertreter: Jeck, Anton
(86) Internationale Anmeldenummer: PCT/AZ2009/000005
(87) Internationale Veröffentlichungsnummer: WO 2010/078631

(57) **Zusammenfassung**

Die Erfindung betrifft einen kolloiden flüssigkristallinen Verbundwerkstoff, der für den Betrieb in elektrooptischen und Fotonengeräten bestimmt ist. Der Verbundwerkstoff ist dadurch hergestellt, dass ein nematischer Flüssigkristall durch kleine Polymerteilchen Poly(2- Methyl-5- Vinylpyridin) und die Teilchen eines Stabilisators 4-n-Heptyl-Hydroxibenzoesäure mit mesogener Eigenschaft ergänzt ist. Der Verbundwerkstoff weist eine hohe Strukturstabilität und verbesserte elektrooptische Kennwerte auf.

## Beschreibung

Die Erfindung betrifft einen kolloiden flüssigkristallinen Verbundwerkstoff für elektrooptische Einrichtungen nach dem Oberbegriff des Anspruchs.

Die Erfindung bezieht sich auf physikalische und Kolloidchemie und zwar auf flüssigkristalline Verbundwerkstoffe, die für den Betrieb in elektrooptischen und Fotonengeräten bestimmt sind.

Die aus dem Stand der Technik bekannten Erfindungen betreffen Verbundwerkstoffe aus flüssigen Kristallen und Polymeren. Gemäß diesen Erfindungen werden die Tropfen von Flüssigkristall im Polymermedium dispergiert [1, 2]. Sie werden dabei als polymerdispergierte Flüssigkristalle bezeichnet. Sie können bei der Herstellung von Temperaturanzeigen, flexiblen Bildschirmen und Anzeigen usw. eingesetzt werden. Aus dem Stand der Technik sind auch flüssigkristalline Verbundwerkstoffe einer anderen Natur bekannt. Als Matrix (das Dispersionsmedium) gilt dabei ein nematischer Flüssigkristall [3]. Die dispergierbaren Teilchen sind Karbonnanoröhrchen, die wirksam durch die Moleküle des Flüssigkristalls ausgerichtet werden.

Der nächste Stand der Technik gegenüber der vorgeschlagenen Erfindung in Bezug auf die technischen Kenndaten und die erreichten Ergebnisse ist ein kolloider flüssigkristalliner Verbundwerkstoff. Er besteht aus 4,4'-Pentyl-Zyan-Biphenyl (pentylcyanobiphenyl) als flüssigkristallines Medium, kleinen Submikroteilchen von Polymethylmethakrylat als dispergierbarer Stoff und Poly-Hydrostearinsäure als Stabilisator. Der Stabilisator ist eine oberflächenaktive Substanz, welche einer Aggregation der Kunststoffteilchen vorbeugt [4].

Der Mangel dieser Erfindung besteht darin, dass die ursprüngliche Struktur des Verbundwerkstoffs, welcher im Prototyp beschrieben ist, nach dem Erwärmung - Kühlung- Zyklus nicht wiederhergestellt wird (nematische Phase - isotrope Phase - nematische Phase).

Es ist Aufgabe der Erfindung, einen kolloiden flüssigkristallinen Verbundwerkstoff mit einem hohen Stabilitätsgrad der Struktur und mit verbesserten Werten bei einigen elektrooptischen Kenndaten herzustellen.

Die gestellte Aufgabe wird durch die Merkmale des Anspruchs gelöst.

Dies geschieht dadurch, dass die nematischen Flüssigkristalle durch Polymer Poly(2-Methyl-5-Vinylpyridin) und 4-n-Heptyl-Hydroxibenzoesäure (heptyloxybenzoic acid) als mesogener Stabilisator ergänzt ist.

Bei hohen Temperaturen (*T* > *T_{NI},* dabei ist *T_{NI}* - die Übergangstemperatur beim Wechsel aus dem nematischen zum isotropen Zustand) löst sich das Polymer im flüssigen Kristall auf. Mit der Abkühlung kommt bei einer bestimmten Temperatur die Phasentrennung zustande: Die nematische Phase des Flüssigkristalls scheidet sich aus der Lösung in Form von winzigen Tröpfchen aus. Bei weiterer Kühlung nimmt die Größe dieser Tröpfchen dank einer Verengung der Kunststoffzwischenwände dazwischen zu. Bei Raumtemperatur entsteht dann ein weicher elastischer Körper. Dieser besteht aus großen flüssigkristallinen Bereichen, die durch dünne Kunststoffwände getrennt sind. Die Größe der flüssigkristallinen Bereiche sowie die Struktur und die Dicke der Kunststoffwände hängen von der Konzentration des Polymerhilfsstoffs und der Abkühlungsgeschwindigkeit ab. Die kritische Konzentration vom Polymer beträgt *x*_{c} ≈ 7 %. Wird dieser Wert überschritten, so entsteht der flüssigkristalline Verbundwerkstoff.

Es sei bemerkt, dass die Zubereitung des Verbundwerkstoffs unter Beteiligung von Polymer Poly(2- Methyl-5- Vinylpyridin) ohne Verwendung eines mechanischen Mischers oder eines Ultraschall-Dispergators vorgenommen werden kann.

Der Vorteil des hergestellten Verbundwerkstoffs besteht darin, dass nach dem Zyklus Erwärmung - Kühlung (nematische Phase - isotrope Phase - nematische Phase) das ursprüngliche Gefüge (die ursprüngliche Textur) wiederhergestellt wird. Außerdem kann bei der Zubereitung des Verbundwerkstoffs der nematische Flüssigkristall mit sowohl positiver (s. Beispiel 1) als auch mit negativer Anisotropie der Dielektrizitätskennzahl (Beispiel 2) angewendet werden. Dies ermöglicht es, unterschiedliche elektrooptische Effekte in den hergestellten Verbundwerkstoffen zu erreichen (S- und B-Effekte, Twist-Effekt, dynamische Lichtzerstreuung usw.).

Bei der Herstellung der Verbundwerkstoffe wurden folgende flüssigkristalline und Polymerwerkstoffe verwendet:
1) Flüssigkristall 4,4'-Pentyl-Zyan-Biphenyl (5CB, Fabrikat der Fa. MERCK) mit der folgenden Konstitutionsformel 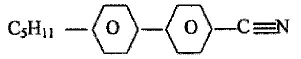 mit Phasenübergangstemperaturen *Crysal* von 21,5° C *Nematic* von 35° C *Isotropic.* Dieser Flüssigkristall weist eine positive Anisotropie der Dielektrizitätskennzahl Δε = + 11,5 bei 20° C auf.
2) Flüssigkristall 4-Methoxylbenzal -4'- Butylanilin (MBBA, Fabrikat der Fa. MERCK) mit der folgenden Konstitutionsformel 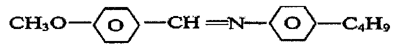 und mit Phasenübergangstemperaturen *Crysal* von 22° C *Nematic* von 47° C *Isotropic.* Dieser Flüssigkristall weist eine negative dielektrische Anisotropie Δε = -0,54 bei 20°C auf.
3) Flüssigkristall 4-Äthoxybenzal -4'-Butylanilin (EBBA, Fabrikat der Fa. MERCK) mit der folgenden Konstitutionsformel 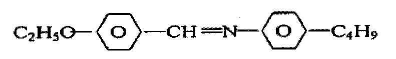 und mit Phasenübergangstemperaturen *Crysal* von 37,6° C *Nematic* von 80° C *Isotropic.* Der Flüssigkristall weist eine negative Anisotropie der Dielektrizitätskennzahl Δε = -0,54 bei 20°C auf.
4) Stabilisator mesogener Natur 4-n-Heptyl-Hydroxibenzoesäure (HOBA, Fabrikat der Fa. MERCK) mit der folgenden Konstitutionsformel 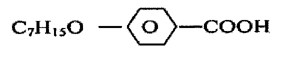
5) Polymer Poly(2- Methyl-5- Vinylpyridin) (PMVP, Fabrikat der Fa. MERCK) mit der folgenden Konstitutionsformel 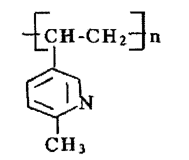 und mit einer Schmelztemperatur von *T*_{Sch} = 122° C.

Beispiel 1: Der flüssigkristalline Verbundwerkstoff wurde mittels Abwägens der Zutaten und ihrer Vermengung bei einer Temperatur von 60 - 70° C hergestellt. Der flüssigkristalline Verbundwerkstoff schloss folgende Bestandteile ein:

| | |
|---|---|
| nematischer Flüssigkristall 5CB | 86 % (Gew.) |
| Polymer PMVP | 12 % (Gew.) |
| Stabilisator HOBA | 2 % (Gew.) |

mit Phasenübergängen Cryst von 20° C *N* 34,5° C *Iso* und wies eine positive Anisotropie der Dielektrizitätskennzahl (Aε > 0) auf. Deswegen kann darin ein S - Effekt und einTwist- Effekt erreicht werden.

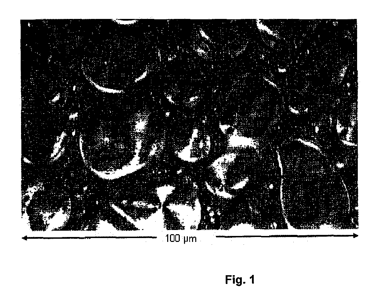

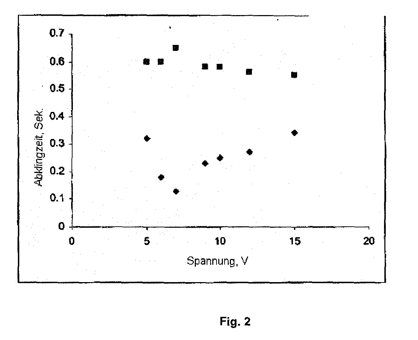

Dieser Verbundwerkstoff wurde in einer elektrooptischen Zelle unter dem Polarisationsmikroskop aufgenommen (die Dicke des Probestücks beträgt 12 µm). Die Aufnahme des Verbundwerkstoffs zeigt, dass der kolloide Verbundwerkstoff aus großen Bereichen von Flüssigkristallen besteht. Die durchschnittliche Größe beträgt ca. 10 µm. Die Kristalle sind durch ca. 1 µm starke Kunststoffwände getrennt (Fig. 1). Die Abklingzeit des elektrooptischen Effekts (z. B. des S-Effekts) im Verbundwerkstoff hängt von der angelegten Spannung ab. Sie ist ca. um das 5- bis 6-fache geringer als bei reinem Flüssigkristall 5CB (Fig. 2).

Beispiel 2: Der flüssigkristalline Verbundwerkstoff wurde hergestellt, indem die Bestandteile abgewogen und bei einer Temperatur von 60 - 70° C vermengt wurden. Der flüssigkristalline Verbundwerkstoff bestand aus folgenden Komponenten:

| | |
|---|---|
| nematischer Flüssigkristall MBBA | 43 % (Gew.) |
| nematischer Flüssigkristall EBBA | 43 % (Gew.) |
| Polymer PMVP | 12 % (Gew.) |
| Stabilisator HOBA | 2 % (Gew.) |

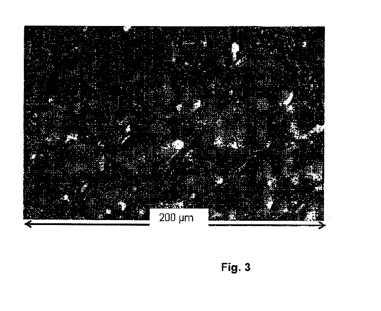

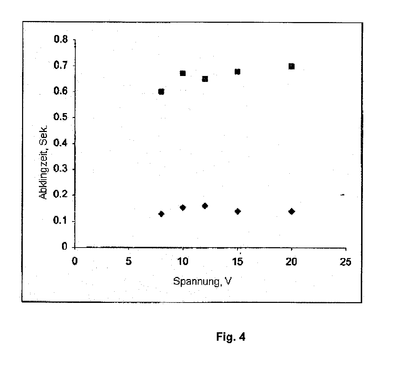

mit folgenden Phasenübergängen Cryst von 10° C *N* 55° C *Iso* und wies eine Dielektrizitätskennzahl (Δε < 0) auf. Deswegen kann darin der B-Effekt erreicht werden. Die Mikroaufnahme und die Abhängigkeit der Abklingzeit von der Spannung des B-Effekts für diesen Verbundwerkstoff sind jeweils in Fig. 3 und Fig. 4 abgebildet. In diesem Verbundwerkstoff hängt die Abklingzeit des B-Effekts nur wenig von der Spannung ab und ist wesentlich geringer (um das 5- bis 6-fache), als es bei reinem Flüssigkristall der Fall ist.

### Quellennachweise

1. Ober C.K., Weiss R. A. Polymer dispersed liquid crystals, Condensed Matter News, 1992, v., N7, p. 20
2. Reamey R.H., Mazzanti J. et all. Method of making liquid crystal composite. Patent UK 1011703, 2002
3. Lee W., Gau J. -Sh. et all. Liquid crystal composite and device comprising the same, US Patent 2008011983, 2008
4. Nakamura H., Crain J. Display device and an electrooptical device using a colloidal liquid crystal composite, US Patent 6620466, 2003

## Patentansprüche

1. Kolloider flüssigkristalliner Verbundwerkstoff für elektrooptische Einrichtungen mit einem nematischen Flüssigkristall,
**dadurch gekennzeichnet,**
**dass** als dispergierbarer Stoff Poly(2- Methyl-5- Vinylpyridin) und als Stabilisator 4-n-Heptyl-Hydroxibenzoesäure bei folgendem Komponentenverhältnis (in %Gew.), verwendet ist:
| | |
|---|---|
| Poly(2- Methyl-5- Vinylpyridin) | 7 - 20 |
| 4-n-Heptyl-Hydroxibenzoesäure | 1 - 4 |
| nematischer Flüssigkristall | Rest |
